# DEMANDE DE BREVET EUROPEEN

(11) **EP 4 763 015 A1**
(43) Date de publication de la demande: **24.06.2026**
(21) Numéro de dépôt: 25220720.4
(22) Date de dépôt: 04.12.2025
(51) Int. Cl.: A47J 42/10, A47J 42/20

(54) **SYSTEME DE BROYAGE D'UN MATERIAU GRANULAIRE ALIMENTAIRE, MUNI D'UN DISPOSITIF DE GAVAGE**

(30) Priorité: 23.12.2024 FR 2415165
(71) Demandeur: SEB S.A., 69130 Ecully (FR)
(72) Inventeur: BUSZKO, Christophe, 69134 ECULLY CEDEX (FR); EVRARD, Yoann, 69134 ECULLY CEDEX (FR); FOULONNEAU, Stéphane, 69134 ECULLY CEDEX (FR)
(74) Mandataire: SEB Développement

(57) **Abrégé**

La présente divulgation concerne un système de broyage d'un matériau granulaire alimentaire, comprenant :
- une première meule mobile (7),
- une deuxième meule (6),
- un arbre de rotation (9) configuré pour entraîner la première meule mobile (7) en rotation, la première meule mobile (7) comprenant une portion de broyage (14) configurée pour permettre un broyage du matériau granulaire contre la deuxième meule (6),
le système de broyage comprenant en outre un dispositif de gavage (1) du système de broyage du matériau granulaire comprenant :
- un élément de fixation (2) à l'arbre de rotation (9), et
- un élément de gavage comprenant une portion proximale (4), une portion coudée (13) et une portion distale de gavage (5), un évidement (12) séparant la portion distale de gavage (5) de l'élément de fixation (2).

## Description

### DOMAINE TECHNIQUE

La présente demande concerne le domaine des systèmes de broyage d'un matériau granulaire, notamment pour broyer des grains de café afin de produire un café moulu. Elle porte plus spécifiquement sur un système de broyage d'un matériau granulaire alimentaire muni d'un dispositif de gavage.

### ETAT DE LA TECHNIQUE

Un système de broyage à meules comprend typiquement une meule mobile et une meule fixe, toutes deux généralement de forme conique. Un tel système est notamment présent dans certaines machines à café, de sorte à produire un café moulu à partir de grains de café. Les deux meules sont montées en rotation l'une par rapport à l'autre autour d'un axe principal qui leur est commun. Une des meules est actionnée en rotation par un moteur, tandis que l'autre meule reste par exemple statique par rapport à l'axe principal, de sorte que des grains entraînés par la gravité vers une zone de convergence entre les meules sont broyés entre les deux meules.

Le débit de broyage des grains entre les meules dépend directement de la vitesse de rotation de la meule mobile : plus cette vitesse est élevée, plus les grains épais sont broyés rapidement et plus un volume important de grains pourra s'écouler librement vers la zone de convergence. Lorsqu'on souhaite augmenter le débit de grains broyés, il est donc nécessaire d'augmenter la vitesse de rotation de la meule mobile. Toutefois, une telle augmentation présente plusieurs inconvénients.

Premièrement, ceci augmente inévitablement le bruit généré par le moteur qui entraîne la meule mobile, et résulte en un inconfort pour l'utilisateur notamment dans le cas où le système de broyage considéré fait partie d'un appareil électroménager.

En outre, une augmentation de la vitesse de rotation de la meule mobile n'est possible que pour un moteur capable de fournir un couple mécanique suffisant. Ceci est donc prohibitif quant au type de moteur que doit comprendre le système de broyage. Par exemple, il peut être souhaitable d'utiliser certains moteurs à courant continu qui permettent une vitesse de rotation stable, cependant de tels moteurs ne peuvent atteindre que des vitesses de rotation limitées.

Enfin, une augmentation de la vitesse de rotation de la meule mobile modifie la granulométrie du grain broyé, alors qu'on peut souhaiter augmenter le débit de broyage sans modifier cette granulométrie pour maintenir des propriétés organoleptiques optimale du grain broyé et d'une boisson réalisée avec un tel grain. Par exemple, dans le cas d'un système de broyage de café, on peut souhaiter augmenter le débit de broyage, de sorte à obtenir un volume plus important de café moulu dans un temps donné, sans toutefois modifier l'épaisseur des grains moulus qui a un impact considérable sur la texture et la saveur du café.

Certaines solutions ont été envisagées par l'état de la technique pour augmenter le débit de broyage d'un système de broyage pour appareil électroménager. Par exemple, il existe des systèmes de broyage comprenant une vis sans fin permettant de gaver la zone de convergence entre les meules. Toutefois, l'augmentation de débit permise par de tels systèmes reste limitée pour une vitesse de rotation de la meule mobile prédéfinie.

### EXPOSE DE L'INVENTION

Il existe donc un besoin pour un système de broyage qui permette d'augmenter un débit de broyage de grains, sans qu'il soit nécessaire d'augmenter une vitesse de rotation d'une meule mobile du système de broyage.

À cet effet, il est proposé un système de broyage d'un matériau granulaire alimentaire, comprenant :
- une première meule mobile,
- une deuxième meule,
- un arbre de rotation configuré pour entraîner la première meule mobile en rotation,

la première meule mobile comprenant une portion de broyage configurée pour permettre un broyage du matériau granulaire contre la deuxième meule,
le système de broyage comprenant en outre un dispositif de gavage du système de broyage du matériau granulaire, le dispositif de gavage comprenant :
   - un élément de fixation à l'arbre de rotation du système de broyage, et
   - un élément de gavage, l'élément de gavage comprenant :
      - une portion proximale allongée s'étendant dans un plan de référence depuis l'élément de fixation en s'éloignant de l'élément de fixation,
      - une portion coudée s'étendant depuis la portion proximale dans le plan de référence, et
      - une portion distale de gavage s'étendant depuis la portion coudée en formant un angle non nul avec la portion proximale, un évidement séparant la portion distale de gavage de l'élément de fixation,
dans lequel l'élément de fixation, la portion proximale, la portion coudée et la portion de gavage sont venus de matière.

La présence d'une portion distale de gavage qui s'étend depuis une portion coudée, et qui ne prolonge donc pas directement la portion proximale, permet de forcer le passage de grains vers une partie du système où sont broyés les grains, ce qui résulte en un débit de grains broyés plus important, sans nécessité d'augmenter la vitesse de rotation de la meule mobile. On peut ainsi moudre une quantité de matériau granulaire donnée dans un temps plus court, sans s'exposer aux inconvénients qui découlent d'une augmentation de la vitesse de rotation. En outre, la présence de la portion distale de gavage permet une meilleure agitation des grains, et donc une amélioration de leur descente vers la partie du système ou ces grains sont broyés.

Selon certains modes de réalisation, la portion distale de gavage s'étend en dehors du plan de référence en définissant un angle non nul avec le plan de référence, l'angle étant de préférence compris entre 10° et 45°, encore préférentiellement compris entre 15° et 30°.

Selon certains modes de réalisation, une projection de la portion distale de gavage dans un plan médian de l'élément de fixation se rapproche de l'élément de fixation depuis la portion coudée jusqu'à une extrémité libre de la portion distale de gavage.

Selon certains modes de réalisation, une distance minimale entre l'élément de fixation et la portion distale de gavage est supérieure ou égale à 0,5 mm et inférieure ou égale à 8 mm.

Selon certains modes de réalisation, l'élément de fixation définit un axe de rotation du dispositif de gavage, et la portion proximale s'étend selon une direction d'allongement, une projection de la direction d'allongement sur un plan médian de l'élément de fixation étant parallèle à une direction radiale par rapport à l'axe de rotation, la projection de la direction d'allongement sur le plan médian de l'élément de fixation étant située à une distance non-nulle de la direction radiale.

Selon certains modes de réalisation, la portion distale de gavage présente un bord externe courbe.

Selon certains modes de réalisation, l'élément de fixation comprend un orifice central configuré pour fixer le dispositif de gavage à l'arbre de rotation.

Selon certains modes de réalisation, le système de broyage comprend une pluralité d'éléments de gavage équirépartis autour de l'élément de fixation.

Selon certains modes de réalisation, le système de broyage comprend deux ou trois éléments de gavage.

Selon certains modes de réalisation, la deuxième meule est fixe, la première meule mobile et la deuxième meule fixe définissant une direction axiale commune.

Selon certains modes de réalisation, la première meule mobile comprend une pluralité de dents s'étendant selon une direction radiale de la première meule mobile, et une projection de la portion proximale sur un plan orthogonal à l'arbre de rotation comprend une projection d'un sommet de l'une des dents sur le plan orthogonal à l'arbre de rotation.

Selon certains modes de réalisation, la première meule mobile comprend une pluralité de dents s'étendant selon une direction radiale de la première meule mobile, et une projection d'un sommet de chaque dent sur un plan orthogonal à l'arbre de rotation se trouve en dehors d'une projection de la portion proximale sur le plan orthogonal à l'arbre de rotation.

Selon certains modes de réalisation, le système de broyage comprend un moteur à courant continu configuré pour entraîner l'arbre de rotation.

Selon certains modes de réalisation, le système de broyage comprend un système de détection configuré pour :
- Mesurer une intensité de courant consommée par un moteur entrainant la première meule mobile, l'intensité du courant mesurée étant représentative d'une vitesse de rotation de la première meule mobile,
- comparer l'intensité de courant mesurée avec une intensité de courant de référence, et
- générer un signal représentatif d'une présence ou d'une absence de grains dans la portion de broyage à partir d'un résultat de la comparaison.

Selon certains modes de réalisation, le dispositif de gavage est fixé à l'arbre de rotation par vissage autour d'une portion externe filetée de l'arbre de rotation.

Selon certains modes de réalisation, la portion distale de gavage s'étend, en configuration montée du système de broyage, en s'éloignant de la portion de broyage depuis la portion coudée vers un bord libre de la portion distale de gavage.

### DESCRIPTION DES FIGURES

[Fig. 1] représente un système de broyage d'un matériau granulaire.
[Fig. 2a] représente une deuxième meule du système de broyage.
[Fig. 2b] représente une première meule mobile du système de broyage.
[Fig. 3] représente un dispositif de gavage pour le système de broyage, le dispositif de gavage comprenant un unique élément de gavage.
[Fig. 4] représente un dispositif de gavage pour le système de broyage, le dispositif de gavage comprenant deux éléments de gavage.
[Fig. 5] représente un dispositif de gavage pour le système de broyage, le dispositif de gavage comprenant trois éléments de gavage.

Sur les figures, des éléments identiques ou similaires sont désignés par les mêmes signes de référence.

### DESCRIPTION DETAILLEE DE MODES DE RÉALISATION

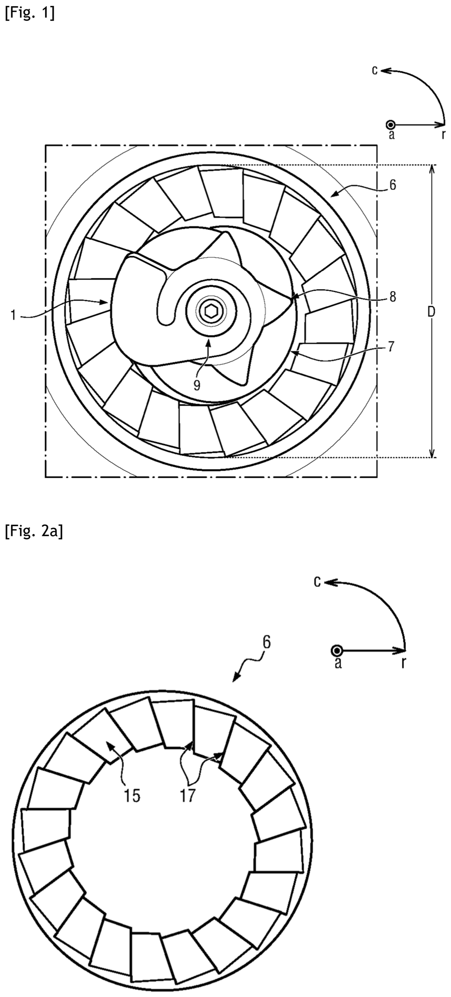

La figure 1 représente un système de broyage pour broyer un matériau granulaire alimentaire de sorte à obtenir un matériau pulvérulent. Le système est notamment prévu pour broyer des grains de café de sorte à obtenir un café moulu.

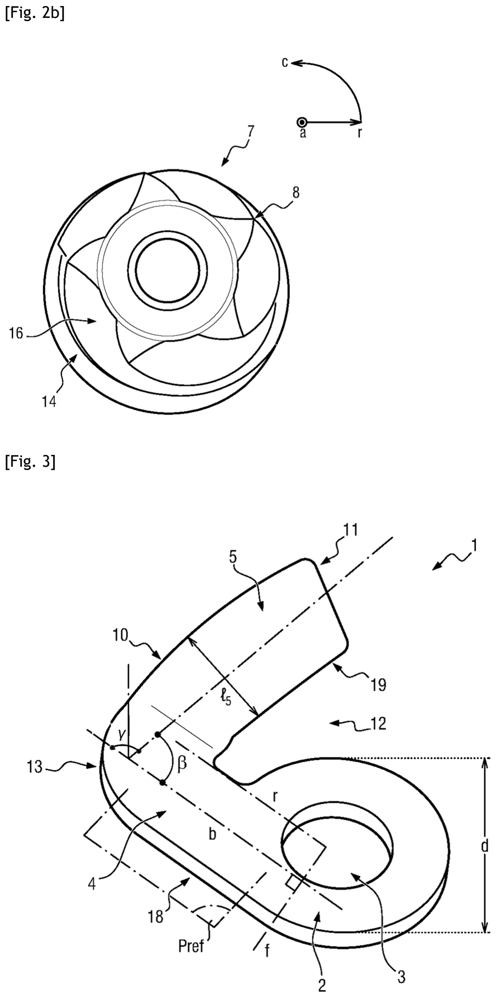

Le système de broyage comprend deux meules 6, 7 qui coopèrent pour broyer le matériau granulaire. Ces deux meules 6, 7 sont représentées individuellement plus en détail sur les figures 2a et 2b. Une première meule 7 est mobile en rotation, et est mécaniquement solidaire d'un arbre de rotation 9 apte à être entraîné par un moteur. Une deuxième meule 6 est fixe, de sorte que la première meule 7, lorsqu'elle est entraînée par l'arbre de rotation 9, se déplace par rapport à la deuxième meule 6. Selon le mode de réalisation des figures 1 et 2a et b, les meules 6, 7 présentent chacune une forme de cône de révolution tronqué - dans une position d'utilisation du système de broyage, la première meule mobile 7 présente une forme évasée vers le bas tandis que la deuxième meule 6 présente une forme évasée vers le haut.

Une paroi externe 16 de la première meule mobile 7 et une paroi interne 15 de la deuxième meule 6 définissent entre elles une zone de réception de grains, apte à recevoir une quantité de grains à moudre. Une portion inférieure de la paroi externe 16 de la première meule mobile 7 définit une portion de broyage 14, dont un diamètre est suffisamment proche du diamètre D de la paroi interne 15 de la deuxième meule 6 pour permettre au matériau granulaire, lorsqu'il atteint la portion de broyage 14 sous l'effet de la gravité, d'être broyé entre les deux meules 6, 7.

La première meule mobile 7 et la deuxième meule 6 définissent ensemble une direction axiale, notée a. L'arbre de rotation 9 s'étend selon cette direction axiale a. Une direction radiale r est définie comme toute direction perpendiculaire à la direction axiale a et passant par celle-ci. Une direction circonférentielle c est définie comme toute direction perpendiculaire à la direction axiale a et ne passant pas par celle-ci.

De sorte à faciliter le broyage du matériau granulaire, la paroi interne 15 de la deuxième meule 6 présente une forme en dents de scie. Lorsque des grains sont poussés à l'encontre de la paroi interne 15 par l'action rotative de la première meule mobile 7, les dents 17 de la paroi interne 15 concentrent l'effort exercé par la paroi interne 15 en une position localisée sur le grain et facilitent donc son broyage.

La paroi externe 16 de la première meule mobile 7 comprend également des dents configurées pour faciliter un broyage du matériau granulaire. Les dents s'étendent sensiblement selon une direction radiale r et présentent des sommets 8. Elles exercent la même action de concentration des efforts que les dents 17 de la deuxième meule 6.

Selon certains modes de réalisation, l'arbre de rotation 9 est configuré pour être relié à un moteur à courant continu, ce qui permet un actionnement plus silencieux de la meule mobile 7 que si un moteur à courant alternatif était utilisé. En outre, l'utilisation d'un moteur à courant continu permet une meilleure stabilité de la vitesse de rotation. Toutefois, l'arbre de rotation 9 est préférentiellement configuré pour pouvoir être relié sélectivement soit à un moteur AC (moteur à courant alternatif), soit à un moteur DC (moteur à courant continu).

Le système de broyage comprend en outre un système de détection d'absence de grains. Le système de détection comprend un capteur de courant apte à déterminer un courant consommé par le moteur. Lorsqu'une quantité anormalement faible de grains est présente dans la zone de réception de grains, le moteur consomme moins de courant que lorsque la zone de réception de grains est remplie. Une unité de traitement reçoit régulièrement des signaux provenant du capteur de courant, indicatifs du courant consommé par le moteur, et compare ces signaux avec une intensité de référence correspondant à un fonctionnement du moteur lorsque la zone de réception de grains est pleine. L'unité de traitement peut donc détecter l'absence, ou la présence en quantité anormalement faible, de grains dans la zone de réception de grains.

Tel qu'illustré sur la figure 3, le système de broyage comprend un dispositif de gavage 1 fixé à l'arbre de rotation 9 par le biais d'un élément de fixation 2. Le dispositif de gavage 1 est prévu pour forcer les grains déversés dans la zone de réception de grains vers la portion de broyage 14, de sorte à assurer que la quantité la plus importante possible de grains est broyée en un temps donné. En d'autres termes, le dispositif de gavage 1 permet d'augmenter le débit de broyage du système de broyage. Un avantage du dispositif de gavage 1 est de permettre l'atteinte d'un débit de broyage satisfaisant y compris lorsqu'un moteur à courant continu est utilisé, ce type de moteur ne permettant pas d'atteindre des vitesses de rotation aussi élevées qu'un moteur à courant alternatif. On obtient ainsi un système de broyage qui est à la fois silencieux et avec une vitesse de rotation stable, du fait de l'utilisation du moteur DC, tout en maintenant un débit de broyage élevé.

Dans le mode de réalisation représenté, l'élément de fixation 2 prend la forme d'un anneau comprenant un orifice central 3, dans lequel est inséré l'arbre de rotation 9. Lors d'un fonctionnement du système de broyage, ceci permet que l'arbre de rotation soit entouré de matière sur toute sa circonférence, et empêche ainsi tout désengagement du dispositif de gavage 1 par rapport à l'arbre de rotation 9.

Selon un mode de réalisation, le dispositif de gavage 1 est fixé par vissage autour d'une portion externe filetée de l'arbre de rotation 9. Dans ce cas, l'élément de fixation 2 comprend une paroi interne filetée complémentaire du filetage de la portion externe filetée de l'arbre de rotation 9. Selon un autre mode de réalisation, l'élément de fixation 2 est plat et est retenu sur l'arbre de rotation 9 par enserrement entre la meule mobile 7 et une tête de l'arbre de rotation 9.

Selon un autre mode de réalisation, l'arbre de rotation 9 comprend un filetage interne, et l'élément de fixation 2 est retenu par une vis dont le filetage externe est complémentaire du filetage interne de l'arbre de rotation 9. La vis 2 est vissée sur l'arbre de rotation alors que l'élément de fixation est disposé autour de l'arbre de rotation 9. La vis peut comprendre une tête dont un diamètre externe est supérieur à un diamètre interne de l'élément de fixation (par exemple, à un diamètre de l'orifice d'un anneau formant l'élément de fixation 2).

Le dispositif de gavage 1 comprend en outre un élément de gavage assurant le gavage des grains vers la zone de réception de grains. L'élément de gavage prend essentiellement la forme d'une pale coudée, définie par une portion proximale 4, une portion coudée 13 et une portion distale de gavage 5. Les différentes portions de l'élément de gavage sont venues de matière, et sont constituées d'un matériau métallique, conférant à l'élément de gavage une rigidité et une résistance mécanique adéquates eu égard aux efforts auxquels il est soumis en utilisation.

La portion proximale 4 s'étend depuis l'élément de fixation 2. Lorsque l'élément de fixation 2 prend la forme d'un anneau, la portion proximale 4 s'étend depuis une circonférence externe de l'anneau. La portion proximale est plane, et s'étend donc dans un plan de référence P_{ref}. La portion proximale 4 est allongée, c'est-à-dire qu'elle définit une direction d'allongement b à l'écart de l'élément de fixation 2, une longueur de la portion proximale 4 selon la direction d'allongement étant plus importante qu'une largeur de la portion proximale perpendiculairement à la direction d'allongement, la longueur et la largeur de la portion proximale 4 étant toutes deux définies dans le plan de référence P_{ref}. La fonction de la portion proximale 4 étant de tenir la portion de gavage 5 à distance de l'arbre de rotation 9, la nature allongée de la portion proximale 4 et la présence d'un évidement 12 entre l'élément de fixation 2 et la portion distale de gavage 5 permettent, avantageusement, de minimiser un moment d'inertie de la portion proximale 4 autour de l'axe de rotation, sans compromettre l'efficacité du gavage assuré par le dispositif de gavage, puisque l'essentiel de l'action de gavage qu'il exerce a lieu à distance de l'arbre de rotation 9, là où la force centrifuge est le plus susceptible de faire remonter les grains à l'écart de la portion de broyage 14, et là où la portion distale de gavage 5 est apte à exercer un effort de gavage important.

La portion proximale 4 peut soit s'étendre dans un plan médian de l'élément de fixation 2 (c'est-à-dire que le plan de référence P_{ref} est confondu avec ce plan médian), soit s'étendre dans un plan sécant avec le plan médian de l'élément de fixation 2, de sorte que la position axiale de la portion proximale 4 change depuis l'élément de fixation 2 jusqu'à la portion coudée 13. Par « plan médian », on entend un plan orthogonal à la direction axiale de l'anneau - et donc, en configuration montée du système de broyage, à l'arbre de rotation 9 - et divisant l'anneau en deux portions d'épaisseur égale selon la direction axiale. La figure 3 représente le mode de réalisation pour lequel la portion proximale 4 s'étend dans un plan de référence P_{ref} confondu avec le plan médian de l'élément de fixation 2.

Selon un mode de réalisation, la portion proximale 4 s'étend selon une direction radiale r. Alternativement, et tel que représenté sur la figure 3, lorsque le dispositif de gavage est projeté sur un plan médian de l'élément de fixation 2, la direction d'allongement b de la portion proximale 4 est distincte de, mais parallèle à, la direction radiale r. Notamment, toujours en considérant une projection sur le plan médian de l'élément de fixation 2, la direction d'allongement b est déportée de la direction radiale r de sorte qu'un bord externe 18 de la portion proximale 4 soit tangent à l'anneau formé par l'élément de fixation 2 en un point de sa circonférence sécant avec un rayon f perpendiculaire à la direction d'allongement b.

La direction d'allongement b passe par un plan médian de la portion proximale 4, ce plan médian séparant la portion proximale 4 en deux portions de largeur identique.

La portion coudée 13 s'étend depuis la portion proximale 4, c'est-à-dire depuis l'extrémité de la portion proximale 4 opposée à l'élément de fixation 2. La portion coudée 13 assure une fonction de jonction entre la portion proximale 4 et la portion distale de gavage 5. La portion coudée 13 s'inscrit dans le plan de référence P_{ref} défini par la portion proximale 4. Du fait de la présence de la portion coudée 13, lorsqu'on considère une projection en deux dimensions de l'élément de gavage sur le plan de référence P_{ref}, la portion distale 5 ne s'étend pas dans le prolongement de la portion proximale 4, mais définit un angle γ non nul avec la portion proximale 4. Ceci permet que la portion distale de gavage 5 s'étende plus proche de - voire selon - la direction circonférentielle c. Ainsi, lorsque le dispositif de gavage est en mouvement du fait d'une rotation de l'arbre de rotation 9, la portion distale de gavage 5 exerce un effort de gavage sur une quantité de grains plus importante que si la portion distale de gavage 5 s'étendait dans le prolongement de la portion proximale 4. L'effet de gavage est donc amélioré. Le fait que la portion distale de gavage 5 forme un angle γ non nul avec la portion proximale 4 a également pour conséquence que l'évidement 12 est défini entre l'élément de fixation 2 et la portion distale de gavage 5.

La portion distale de gavage 5 s'étend quant à elle depuis une extrémité de la portion coudée 13, jusqu'à un bord libre 11 de la portion distale de gavage 5. La portion distale de gavage 5 présente un bord externe courbe 10, notamment un bord externe courbe 10 dont la projection sur le plan médian de l'élément de fixation 2 définit un arc de cercle autour de l'arbre de rotation 9. Le bord externe courbe 10 peut donc s'étendre selon une direction correspondant avec la direction circonférentielle, de façon à assurer un gavage uniforme des grains lors d'un fonctionnement du système de broyage.

Selon certains modes de réalisation, lorsqu'on considère la projection de l'élément de gavage sur le plan médian de l'élément de fixation 2, la portion distale de gavage 5 se rapproche de l'élément de fixation 2 depuis la portion coudée 13 jusqu'au bord libre 11.

Une première option pour assurer ce rapprochement est que le bord externe courbe 10 définisse un arc de cercle autour de l'arbre de rotation 9, tandis qu'un bord interne courbe 19 de la portion distale de gavage 5 se rapproche de l'élément de fixation 2. Dans ce cas, toujours dans le plan médian de l'élément de fixation 2, une largeur l₅ de la portion distale de gavage 5 perpendiculairement à sa direction d'allongement augmente depuis la portion coudée 13 jusqu'au bord libre 11.

Une deuxième option pour assurer ce rapprochement est que la dimension de la portion distale de gavage 5 perpendiculairement à sa direction d'allongement reste constante, auquel cas les projections à la fois du bord externe courbe 19 et du bord interne courbe 10 dans le plan médian de l'élément de fixation 2 se rapprochent de l'élément de fixation 2 depuis la portion coudée 13 jusqu'au bord externe libre 11.

La portion distale de gavage 5 s'étend en définissant un angle B non-nul avec le plan de référence P_{ref} défini par la portion proximale 4. Ceci permet à la portion distale de gavage 5 d'exercer un effet de gavage sur un plus grand volume de matériau granuleux : en effet, cette inclinaison de la portion distale de gavage 5 lui permet de venir en contact avec des grains disposés sur une plage large de positions axiales. En d'autres termes, on minimise la quantité de matériau granuleux qui passe au-dessus de la portion distale de gavage 5 ou en-dessous de celle-ci sans venir en contact avec la portion distale de gavage 5, et donc sans être forcée vers la portion de broyage 14.

De préférence, l'angle B est tel que la portion distale de gavage 5 s'étend en s'éloignant de la portion de broyage 14 depuis la portion coudée 13 jusqu'au bord libre 11. En d'autres termes, lorsque le système de broyage est posé sur une table ou un plan de travail, la portion distale de gavage 5 s'étend vers le haut depuis la portion coudée 13 jusqu'au bord libre 11, la portion de broyage étant située plus bas (et donc plus proche de la table ou du plan de travail) que la portion distale de gavage 5.

La portion proximale 4 peut être plus ou moins allongée selon les modes de réalisation. Selon une configuration dite « proche », dans laquelle la portion distale de gavage 5 est relativement proche de l'arbre de rotation 9, une distance minimale entre l'élément de fixation 2 et la portion distale de gavage 5 est comprise entre 0,5 et 4 millimètres par exemple égale à 2,5 mm. Selon une autre configuration, dite « déportée », dans laquelle la portion distale de gavage 5 est relativement éloignée ou déportée par rapport à l'arbre de rotation 9, la distance minimale entre l'élément de fixation 2 et la portion distale de gavage 5 est comprise entre 4 et 8 millimètres, par exemple égale à 5,5 mm. Par « distance minimale », on comprend que la distance entre l'élément de fixation 2 et la portion distale de gavage 5 ne peut être inférieure à cette valeur, quel que soit l'axe selon lequel elle est mesurée, et quels que soient les points respectifs de la portion distale de gavage 5 et de l'élément de fixation 2 entre lesquels cette distance est mesurée.

En d'autres termes, la distance minimale entre la portion distale de gavage 5 et l'élément de fixation 2 correspond à une largeur minimale de l'évidement 12.

L'angle B entre le plan de référence P_{ref} et la portion distale de gavage 5 est compris entre 10 et 45°, de préférence entre 15 et 30°. Cette plage d'angles permet un bon compromis entre, d'une part, un gavage de grains situés sur une large plage de positions axiales et, d'autre part, une composante de la force exercée par la portion distale de gavage 5 sur les grains qui soit majoritairement selon la direction axiale, vers le bas - cette force étant perpendiculaire à la portion distale de gavage 5 - et donc suffisante pour forcer les grains vers la portion de broyage 14.

Tel que représenté sur la figure 1, lorsque la première meule mobile 7 comprend des dents, et si on considère à nouveau la projection en deux dimension du système de broyage sur le plan médian de l'élément de fixation 2, un sommet 18 d'une dent de la première meule mobile 7 peut être inscrit dans le dispositif de gavage (configuration dite « alignée »). Selon un mode de réalisation alternatif, la projection du dispositif de gavage 1 ne comprend pas de projection d'un sommet 18 d'une dent - le dispositif de gavage se trouve donc dans une position intermédiaire entre deux sommets 18 de dents selon la direction circonférentielle (configuration dite « non-alignée »). Des essais qui seront présentés ultérieurement ont démontré que cette configuration « non-alignée » permet un débit de grains à travers le système de broyage supérieur à la configuration « alignée ».

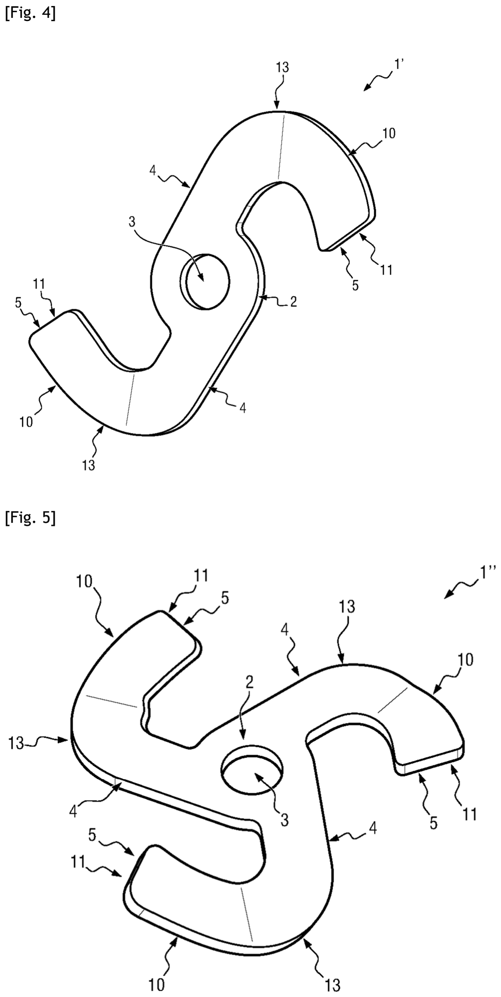

En référence aux figures 4 et 5, le système de broyage comprend selon certains modes de réalisation un dispositif de gavage 1', 1" muni d'une pluralité d'éléments de gavage s'étendant depuis un même élément de fixation 2. La figure 4 montre un dispositif de gavage 1' comprenant deux éléments de gavage distincts, identiques à l'élément de gavage décrit précédemment, disposés selon des positions diamétralement opposées par rapport à l'arbre de rotation 9. La figure 5 montre un dispositif de gavage 1" comprenant trois éléments de gavage distincts, identiques à l'élément de gavage décrit précédemment, disposés à 120° les uns des autres autour de l'arbre de rotation 9. L'augmentation du nombre d'éléments de gavage augmente dans certaines configurations du dispositif de gavage le débit de broyage du système de broyage - notamment, il a été constaté que le fait d'avoir trois éléments de gavage plutôt que deux augmente significativement le débit de broyage dans certaines configuration du dispositif de gavage.

### EXEMPLES ET RÉSULTATS D'ESSAIS

Les inventeurs ont réalisé des séries d'essais pour différents modes de réalisation du dispositif de gavage 1, 1', 1" qui ont mis en évidence l'augmentation du débit de broyage qui résulte de l'adoption de certaines caractéristiques préférentielles.

Le tableau 1 qui suit répertorie les différentes configurations testées pour le dispositif de gavage 1, 1'. 1", ainsi que deux configurations de référence, sans aucun dispositif de gavage, notées « *configuration de référence »,* avec un moteur à courant continu pour l'une et un moteur à courant alternatif pour l'autre. La colonne « *augmentation de débit* » indique le pourcentage d'augmentation de débit moyen constaté par rapport à une configuration du système de broyage ne comportant aucun dispositif de gavage, pour la même configuration de moteur que l'exemple concerné (moteur à courant continu ou alternatif). La colonne *« configuration d'alignement »* indique s'il s'agit d'un système de configuration « *alignée »* ou *« non-alignée* » tel que défini précédemment. La colonne « *portion proximale* » indique si la portion proximale 4 est selon la configuration « *proche* » ou *« déportée* » tel que défini précédemment.

**[Tableau 1]**

| Mode de réalisation | Nombre d'éléments de gavage | Type de moteur | Portion proximale | Configuration d'alignement | Angle B | Débit moyen (g/s) | Augmentation de débit |
|---|---|---|---|---|---|---|---|
| Configuration de référence | 0 | DC | - | - | - | 1,333 | 0% |
| 1 | 1 | DC | Proche | Aligné | 30° | 1,494 | 12% |
| II | 1 | DC | Déportée | Aligné | 20° | 1,489 | 12% |
| III | 1 | DC | Proche | Aligné | 20° | 1,494 | 12% |
| IV | 2 | DC | Déportée | Aligné | 20° | 1,622 | 22% |
| V | 3 | DC | Déportée | Aligné | 20° | 1,661 | 25% |
| VI | 1 | DC | Déportée | Non-aligné | 20° | 1,694 | 27% |
| Configuration de référence | 0 | AC | - | - | - | 1,417 | 0% |
| VII | 1 | AC | Proche | Aligné | 30° | 1,683 | 19% |
| VIII | 1 | AC | Déportée | Aligné | 20° | 1,661 | 17% |
| IX | 1 | AC | Proche | Aligné | 20° | 1,583 | 12% |
| X | 2 | AC | Déportée | Aligné | 20° | 1,667 | 18% |
| XI | 3 | AC | Déportée | Aligné | 20° | 1,689 | 19% |
| XII | 1 | AC | Déportée | Non-aligné | 20° | 1,717 | 21% |

Les conclusions suivantes ressortent notamment des résultats d'essais. Les moteurs utilisés sont des moteurs à 230 V / 50 Hz. Les mesures de débit sont realises sur une moyenne de trois broyages, chaque broyage ayant une durée de six secondes.

### Moteur DC

La présence d'un élément de gavage tel que décrit permet une augmentation du débit de broyage compris entre 12% et 27%.

En comparant les configurations de référence, I et III, on s'aperçoit que l'augmentation de l'angle B entre le plan de référence P_{ref} et la portion distale de gavage 5 de 20° à 30° ne change pas l'augmentation de débit associée à la présence du dispositif de gavage (12% dans les deux cas par rapport à la configuration de référence).

En comparant les configurations II, IV et V, on s'aperçoit que l'augmentation de débit liée à l'augmentation du nombre d'éléments de gavage passe de 12% pour un seul élément de gavage à 25% pour trois éléments de gavage.

En comparant les configurations de référence, II et III, on s'aperçoit que la configuration déportée permet un gain de 12% de débit, quasiment identique au gain obtenu pour la configuration proche.

En comparant les configurations de référence, II et VI, on s'aperçoit que la configuration alignée permet un gain de 12% de débit, contre 27% pour la configuration non-alignée.

### Moteur AC

La présence d'un élément de gavage tel que décrit permet une augmentation du débit de broyage compris entre 12% et 21%.

En comparant les configurations de référence, VII et IX, on s'aperçoit que l'augmentation de l'angle B entre le plan de référence P_{ref} et la portion distale de gavage 5 de 20° à 30° fait passer l'augmentation de débit obtenue de 12% à 19%.

En comparant les configurations de référence, VIII, X et XI, on s'aperçoit que l'augmentation de débit liée à l'augmentation du nombre d'éléments de gavage est relativement faible en comparaison avec l'augmentation associée avec d'autres caractéristiques géométriques de l'élément de gavage, mais que cette augmentation n'est pas nulle. L'augmentation du nombre d'éléments de gavage est donc particulièrement avantageuse lorsque le système de broyage est motorisé par un moteur DC.

En comparant les configurations de référence, VIII et IX, on s'aperçoit que la configuration déportée permet un gain de 17% de débit, contre 12% pour la configuration proche de la portion proximale 4. Le fait d'utiliser une configuration déportée est donc particulièrement avantageuse lorsque le système de broyage est motorisé par un moteur AC.

En comparant les configurations de référence, VIII et XII, on s'aperçoit que la configuration alignée permet un gain de 17% de débit, contre 21% pour la configuration non-alignée.

## Revendications

1. Système de broyage d'un matériau granulaire alimentaire, comprenant :
- une première meule mobile (7),
- une deuxième meule (6),
- un arbre de rotation (9) configuré pour entraîner la première meule mobile (7) en rotation,
la première meule mobile (7) comprenant une portion de broyage (14) configurée pour permettre un broyage du matériau granulaire contre la deuxième meule (6),
le système de broyage comprenant en outre un dispositif de gavage (1) du système de broyage du matériau granulaire, le dispositif de gavage comprenant :
- un élément de fixation (2) à l'arbre de rotation (9) du système de broyage, et
- un élément de gavage, l'élément de gavage comprenant :
- une portion proximale (4) allongée s'étendant dans un plan de référence (P_{ref}) depuis l'élément de fixation (2) en s'éloignant de l'élément de fixation (2),
- une portion coudée (13) s'étendant depuis la portion proximale (4) dans le plan de référence, et
- une portion distale de gavage (5) s'étendant depuis la portion coudée (13) en formant un angle (γ) non nul avec la portion proximale, un évidement (12) séparant la portion distale de gavage (5) de l'élément de fixation (2),
dans lequel l'élément de fixation (2), la portion proximale (4), la portion coudée (13) et la portion de gavage (5) sont venus de matière.

2. Système de broyage selon la revendication 1, dans lequel la portion distale de gavage (5) s'étend en dehors du plan de référence en définissant un angle (B) non nul avec le plan de référence, l'angle (B) étant de préférence compris entre 10° et 45°, encore préférentiellement compris entre 15° et 30°.

3. Système de broyage selon l'une quelconque des revendications 1 et 2, dans lequel une projection de la portion distale de gavage (5) dans un plan médian de l'élément de fixation (2) se rapproche de l'élément de fixation (2) depuis la portion coudée (13) jusqu'à une extrémité libre (11) de la portion distale de gavage (5).

4. Système de broyage selon l'une quelconque des revendications 1 à 3, dans lequel une distance minimale entre l'élément de fixation (2) et la portion distale de gavage (5) est supérieure ou égale à 0,5 mm et inférieure ou égale à 8 mm.

5. Système de broyage selon l'une quelconque des revendications 1 à 4, dans lequel l'élément de fixation (2) définit un axe de rotation (a) du dispositif de gavage (1), et dans lequel la portion proximale (4) s'étend selon une direction d'allongement (b), une projection de la direction d'allongement (b) sur un plan médian de l'élément de fixation (2) étant parallèle à une direction radiale (r) par rapport à l'axe de rotation (a), la projection de la direction d'allongement (b) sur le plan médian de l'élément de fixation (2) étant située à une distance non-nulle de la direction radiale (r).

6. Système de broyage selon l'une quelconque des revendications 1 à 5, dans lequel la portion distale de gavage (5) présente un bord externe courbe (10).

7. Système de broyage selon l'une quelconque des revendications 1 à 6, dans lequel l'élément de fixation (2) comprend un orifice central (3) configuré pour fixer le dispositif de gavage (1) à l'arbre de rotation (9).

8. Système de broyage selon l'une quelconque des revendications 1 à 7, comprenant une pluralité d'éléments de gavage équirépartis autour de l'élément de fixation (2).

9. Système de broyage selon la revendication précédente, comprenant deux ou trois éléments de gavage.

10. Système de broyage selon l'une quelconque des revendications précédentes, dans lequel la deuxième meule (6) est fixe, la première meule mobile (7) et la deuxième meule (6) fixe définissant une direction axiale (a) commune.

11. Système de broyage selon l'une quelconque des revendications précédentes, dans lequel la première meule mobile (7) comprend une pluralité de dents s'étendant selon une direction radiale de la première meule mobile (7), et dans lequel une projection de la portion proximale (4) sur un plan orthogonal à l'arbre de rotation (9) comprend une projection d'un sommet (8) de l'une des dents sur le plan orthogonal à l'arbre de rotation (9).

12. Système de broyage selon l'une quelconque des revendications 1 à 10, dans lequel la première meule mobile (7) comprend une pluralité de dents s'étendant selon une direction radiale de la première meule mobile (7), et dans lequel une projection d'un sommet (8) de chaque dent sur un plan orthogonal à l'arbre de rotation (9) se trouve en dehors d'une projection de la portion proximale (4) sur le plan orthogonal à l'arbre de rotation (9).

13. Système de broyage selon l'une quelconque des revendications précédentes, comprenant un moteur à courant continu configuré pour entraîner l'arbre de rotation (9).

14. Système de broyage selon l'une quelconque des revendications précédentes, comprenant un système de détection configuré pour :
- Mesurer une intensité de courant consommée par un moteur entrainant la première meule mobile (7), l'intensité du courant mesurée étant représentative d'une vitesse de rotation de la première meule mobile (7),
- comparer l'intensité de courant mesurée avec une intensité de courant de référence, et
- générer un signal représentatif d'une présence ou d'une absence de grains dans la portion de broyage (14) à partir d'un résultat de la comparaison.
